# EUROPÄISCHE PATENTANMELDUNG

(11) **EP 1 705 384 A1**
(43) Veröffentlichungstag der Anmeldung: **27.09.2006**
(21) Anmeldenummer: 05006640.6
(22) Anmeldetag: 24.03.2005
(51) Int. Cl.: F16B 5/02

(54) **Vorrichtung zur Aufnahme eines Verbindungsmittels mit einem Aussengewinde**

(71) Anmelder: SIEMENS AKTIENGESELLSCHAFT, 80333 München (DE)
(72) Erfinder: Bergmann, Martin, 92253 Schnaittenbach (DE)

(57) **Zusammenfassung**

Die Erfindung betrifft eine Vorrichtung zur Aufnahme eines Verbindungsmittels (10) mit einem Außengewinde (11). Das Außengewinde (11) weist einen Kerndurchmesser (12) und einen Außendurchmesser (13) auf. Um eine einfache Vorrichtung zum Verhindern des Verhakens von Gewindegängen beim Lösen einer Schraubverbindung bereitzustellen, wird vorgeschlagen, dass die Vorrichtung (1) eine Ausnehmung (2) zur Aufnahme des Verbindungsmittels (10) aufweist, wobei die Ausnehmung (2) einen kleinsten inneren Durchmesser (3) aufweist, welcher größer ist als der Außendurchmesser (13), wobei die Vorrichtung (1) mindestens ein radial angeordnetes, in die Ausnehmung (2) hineinragendes Element (4) zur Verringerung des kleinsten inneren Durchmessers (3) auf einen verringerten inneren Durchmesser (5) aufweist, wobei der verringerte innere Durchmesser (5) kleiner als der Außendurchmesser (13) und größer als der Kerndurchmesser (12) ist, wobei die axiale Ausdehnung (6) des mindestens einen Elements (4) kleiner als eine Gewindesteigung (14) des Außengewindes (11) des aufnehmbaren Verbindungsmittels (10) ist.

## Beschreibung

Die Erfindung betrifft eine Vorrichtung zur Aufnahme eines Verbindungsmittels mit einem Außengewinde sowie ein Verfahren zur Herstellung einer solchen Vorrichtung.

Eine solche Vorrichtung zur Aufnahme eines Verbindungsmittels mit einem Außengewinde wird üblicherweise bei der Verbindung von zwei Teilen durch eine Schraubverbindung eingesetzt, z. B. bei der Verbindung eines Gehäusedeckels mit einem Gehäuse. Dabei dient das Verbindungsmittel mit Außengewinde, z. B. eine Schraube, ein Bolzen, eine Gewindestange o. ä., zum Verbinden der Vorrichtung bzw. eines mit der Vorrichtung verbundenen Teils mit einem weiteren Teil, welches eine Ausnehmung mit einem Innengewinde zur Aufnahme des Außengewindes aufweist. Beim Lösen einer solchen Schraubverbindung können sich die letzten Gewindegänge der beiden Teile, d. h. der letzte Gewindegang des Außen- bzw. des Innengewindes, miteinander verhaken, obwohl die Schraubverbindung vermeintlich gelöst ist. Das Trennen der einzelnen Teile wird dadurch erschwert.

Ist das Verbindungsmittel eine Schraube mit einem Schraubenkopf, so kann mit dem Einsetzen einer Druckfeder zwischen den Schraubenkopf und dem Gehäuseteil bewirkt werden, dass das Schraubengewinde definiert vom Gegenstück gelöst wird. Der Nachteil dieser Lösung liegt darin, dass zum einen eine Druckfeder als zusätzliches Bauteil erforderlich ist und zum anderen spezielle geometrische Ausprägungen an der Schraube sowie an der Schraubenkopfauflage erforderlich sind.

Der Erfindung liegt die Aufgabe zugrunde, eine einfache Vorrichtung zum Verhindern des Verhakens von Gewindegängen beim Lösen einer Schraubverbindung bereitzustellen.

Diese Aufgabe wird durch eine Vorrichtung zur Aufnahme eines Verbindungsmittels mit einem Außengewinde gelöst, wobei das Außengewinde einen Kerndurchmesser und einen Außendurchmesser aufweist, wobei die Vorrichtung eine Ausnehmung zur Aufnahme des Verbindungsmittels aufweist, wobei die Ausnehmung einen kleinsten inneren Durchmesser aufweist, welcher größer ist als der Außendurchmesser, wobei die Vorrichtung mindestens ein radial angeordnetes, in die Ausnehmung hineinragendes Element zur Verringerung des kleinsten inneren Durchmessers auf einen verringerten inneren Durchmesser aufweist, wobei der verringerte innere Durchmesser kleiner als der Außendurchmesser und größer als der Kerndurchmesser ist, wobei die axiale Ausdehnung des mindestens einen Elements kleiner als eine Gewindesteigung des Außengewindes des aufnehmbaren Verbindungsmittels ist.

Die Erfindung beruht auf der Idee, dass das mindestens eine in die Ausnehmung hineinragende Element eine definierte Stellung des Verbindungsmittels bei der Demontage, d. h. beim Lösen der Schraubverbindung, bewirkt. Dazu wird das Verbindungsmittel mit seinem Außengewinde vollständig bis zum Gewindeauslauf durch das in die Ausnehmung hineinragende Element gedreht und somit aus dem entsprechenden Gegengewinde, einem mit dem Außengewinde korrespondierenden Innengewinde, herausgedreht und kann dann ohne Werkzeug diese definierte Position nicht mehr in Richtung Element bzw. in Richtung Gegengewinde verlassen. Es wird somit sichergestellt, dass sich das Gewinde des Verbindungsmittels nach dem vollständigen Lösen des Verbindungsmittels nicht mehr im Eingriff befindet, ein Verhaken desselben ist somit nicht mehr möglich. Die Vorrichtung ist Teil eines zu verbindenden Teils oder ist identisch mit diesem zu verbindenden Teil. Die Gewindesteigung ist der Weg, den das Verbindungsmittel bei einer Umdrehung axial zurücklegt. Das entspricht dem Abstand der Gewindegänge bzw. Gewindekerben bei einem eingängigen Gewinde. Der Außendurchmesser von Außengewinden wird auch als deren Nenndurchmesser bezeichnet. Mit axial wird hier die Richtung bezeichnet, in welcher sich ein Verbindungsmittel beim Schraubvorgang in der Ausnehmung linear bewegt, also z. B. die Bohrrichtung bei einer als Bohrloch ausgeführten Ausnehmung.

Um die auf das in die Ausnehmung hineinragende Element wirkenden Kräfte nicht zu groß werden zu lassen, wird gemäß einer vorteilhaften Ausgestaltung der Erfindung vorgeschlagen, dass der verringerte innere Durchmesser ungefähr dem Flankendurchmesser entspricht. Der Flankendurchmesser ist ein theoretisches Maß, das ungefähr in der Mitte zwischen Nenndurchmesser und Kerndurchmesser liegt. Bei der Herstellung von Gewinden wird der Flankendurchmesser beispielsweise mittels Messbolzen oder mittels spezieller Messschrauben gemessen.

Die Herstellung des mindestens einen Elements wird gemäß einer vorteilhaften Ausgestaltung der Erfindung dadurch vereinfacht, dass das mindestens eine Element radial in einer Ebene angeordnet ist. Das heißt, dass sich die Ebene radial erstreckt. Weitere vorteilhaft zu fertigende Elemente sind als Ring oder als unterbrochener Ring ausgebildet.

Vorteilhafterweise ist das mindestens eine Element derart ausgebildet, dass das in die Ausnehmung aufnehmbare Verbindungsmittel ohne Zerstörung des Außengewindes im Bereich des Elements durch die Ausnehmung bewegbar ist. Dies ermöglicht die dauerhafte Verwendung eines Verbindungsmittels zusammen mit der Vorrichtung.

Gemäß weiteren vorteilhaften Ausgestaltungen der Vorrichtung ist diese aus Metall oder aus Kunststoff gefertigt. Vorteilhafterweise ist das mindestens eine Element einstückig mit der Vorrichtung verbunden.

Die Herstellung der Vorrichtung erfolgt vorteilhafterweise derart, dass das mindestens eine Element durch Integration in einer Form für Spritzgussteile ausgeformt wird. Das mindestens eine Element kann jedoch auch durch nachträgliches Verstemmen an einem fertigen Teil ausgeformt werden oder nachträglich in die Ausnehmung eingesetzt werden.
Nachfolgend wird die Erfindung anhand der in den Figuren dargestellten Ausführungsbeispiele näher beschrieben und erläutert.

Es zeigen:
- FIG 1: einen Schnitt durch eine Vorrichtung mit einem ringförmig ausgebildeten in die Ausnehmung hineinragenden Element,
- FIG 2: eine Draufsicht der Vorrichtung von FIG 1,
- FIG 3: einen Schnitt durch eine Vorrichtung mit einem als unterbrochener Ring ausgebildeten in die Ausnehmung hineinragenden Element,
- FIG 4: eine Draufsicht der Vorrichtung von FIG 3,
- FIG 5: eine Schnittdarstellung einer Vorrichtung im Zusammenhang mit einem weiteren Teil und einem Verbindungsmittel zur Verbindung der Vorrichtung mit dem weiteren Teil und
- FIG 6: die Vorrichtung aus FIG 5 in detaillierterer Schnittdarstellung.

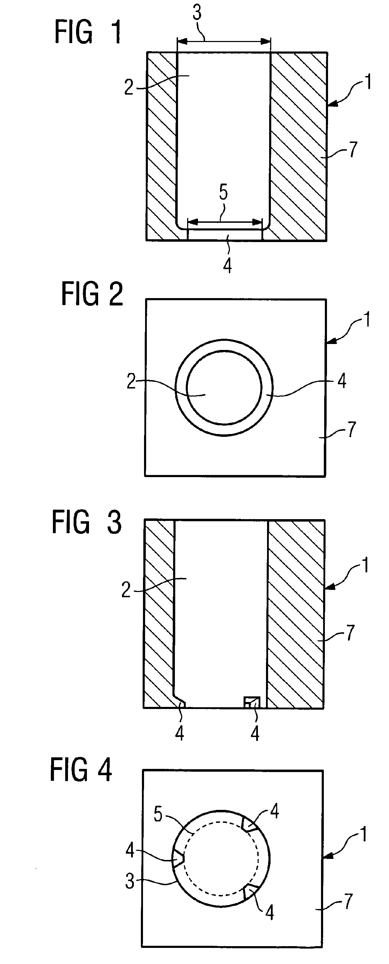

FIG 1 zeigt einen Schnitt durch eine Vorrichtung mit einem ringförmig ausgebildeten, in die Ausnehmung hineinragenden Element. Dargestellt ist die Vorrichtung 1 mit einem Körper 7, welcher eine Ausnehmung 2 aufweist. Die Ausnehmung 2 ist als durchgängiges Loch im Körper 7 der Vorrichtung 1 ausgebildet. Die Ausnehmung 2 weist im größten Teil ihrer axialen Ausdehnung einen kleinsten inneren Durchmesser 3 auf. Dieser kleinste innere Durchmesser 3 wird durch ein in die Ausnehmung 2 hineinragendes Element 4 auf einen verringerten inneren Durchmesser 5 verringert. Das Element 4 ist gemäß dem Ausführungsbeispiel nach FIG 1 als Ring ausgebildet. Das Element 4 ist an einem Ende der Ausnehmung 2 angeordnet.

FIG 2 zeigt eine Draufsicht der Vorrichtung gemäß FIG 1. Sichtbar ist die Vorrichtung 1 mit dem Körper 7, welcher eine Ausnehmung 2 aufweist. Ebenfalls sichtbar ist das in die Ausnehmung 2 hineinragende Element 4, welches hier als Ring ausgebildet ist. Gut erkennbar sind die unterschiedlichen Durchmesser der Ausnehmung 2 einerseits und des Elements 4 andererseits. Das Element 4 ist derart in der Ausnehmung 2 angeordnet, dass das Element 4 einen verringerten inneren Durchmesser 5 im Vergleich zum kleinsten inneren Durchmesser 3 der Ausnehmung 2 bewirkt.

FIG 3 zeigt einen Schnitt durch eine Vorrichtung 1 mit einem als unterbrochener Ring ausgebildeten in die Ausnehmung 2 hineinragenden Element 4. Die Vorrichtung 1 weist einen Körper 7 mit der Ausnehmung 2 auf.

In der Draufsicht der Vorrichtung gemäß FIG 3 in FIG 4 sind die drei Elemente 4, welche in die Ausnehmung 2 hineinragen, erkennbar, die als Teile eines unterbrochenen Rings angesehen werden können. Der durch die Elemente 4 begrenzte verringerte innere Durchmesser ist mit einer gestrichelten Linie angedeutet, welche das Bezugszeichen 5 aufweist. Der kleinste innere Durchmesser 3 der Ausnehmung 2 ist als durchgezogene Linie erkennbar.

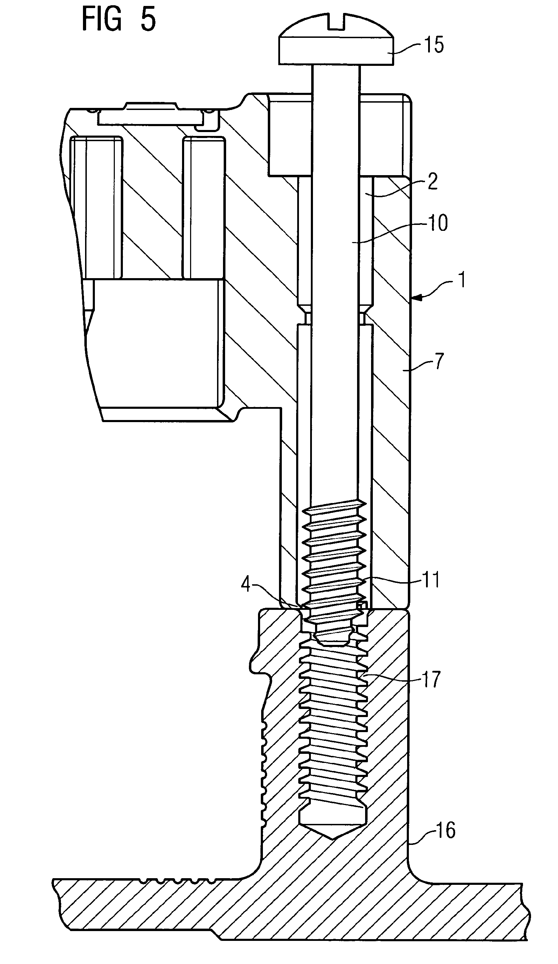

FIG 5 zeigt eine Schnittdarstellung einer Vorrichtung 1 im Zusammenhang mit einem weiteren Teil 16 und einem Verbindungsmittel 10 zur Verbindung der Vorrichtung 1 mit dem weiteren Teil 16. Die Vorrichtung 1 weist einen Körper 7 auf, welcher eine Ausnehmung 2 aufweist. Die Ausnehmung 2 ist derart ausgebildet, dass das Verbindungsmittel 10 in die Ausnehmung 2 aufnehmbar ist. Das Verbindungsmittel 10 ist im Ausführungsbeispiel gemäß FIG 5 als Schraube mit einem Schraubenkopf 15 und einem Außengewinde 11 ausgebildet. Das weitere Teil 16, mit welchem die Vorrichtung 1 verbindbar ist, weist ein zu dem Außengewinde 11 des Verbindungsmittels 10 korrespondierendes Innengewinde 17 auf. Das Verbindungsmittel 10 ist zur Aufnahme der Ausnehmung 2 sowie zur Einführung in das weitere Teil 16 durch Verschraubung des Außengewindes 11 mit dem Innengewinde 17 vorgesehen. Im hier nicht dargestellten vollständig verschraubten Zustand liegt der Schraubenkopf 16 auf dem Körper 7 der Vorrichtung 1 auf und verbindet die Vorrichtung 1 formschlüssig und mit der erforderlichen Kraft mit dem weiteren Teil 16. Im in FIG 5 dargestellten Fall befindet sich das Verbindungsmittel 10 im demontierten Zustand. Das bedeutet, dass sich das Außengewinde 11 des Verbindungsmittels 10 nicht mehr im Eingriff in das Innengewinde 17 des weiteren Teils 16 befindet. Die Vorrichtung 1 ist beispielsweise ein Gehäusedeckel, das weitere Teil 16 dementsprechend ein Gehäuse, welches durch den Deckel verschließbar ist. Insbesondere, wenn der Deckel durch mehrere Verbindungsmittel mit dem zugehörigen Gehäuse verbindbar ist, ergibt sich beim Demontieren des Deckels, d. h. beim Auseinanderschrauben der Teile, häufig das Problem, dass sich einzelne der Verbindungsmittel trotz vollständiger Demontage, aber weiterhin im in die Ausnehmung 2 eingeführten Zustand, mit ihrer letzten Gewindesteigung ihres Außengewindes 11 mit der letzten Gewindesteigung des korrespondierenden Innengewindes 17 verhaken, da das Verbindungsmittel 10 durch Erschütterungen verursachte unerwünschte Drehbewegungen ausführt. Um das zu verhindern, weist die Vorrichtung 1 am unteren Ende, d. h. an dem dem weiteren Teil zugewandten Ende der Ausnehmung 2 in die Ausnehmung hineinragende Elemente 4 auf.

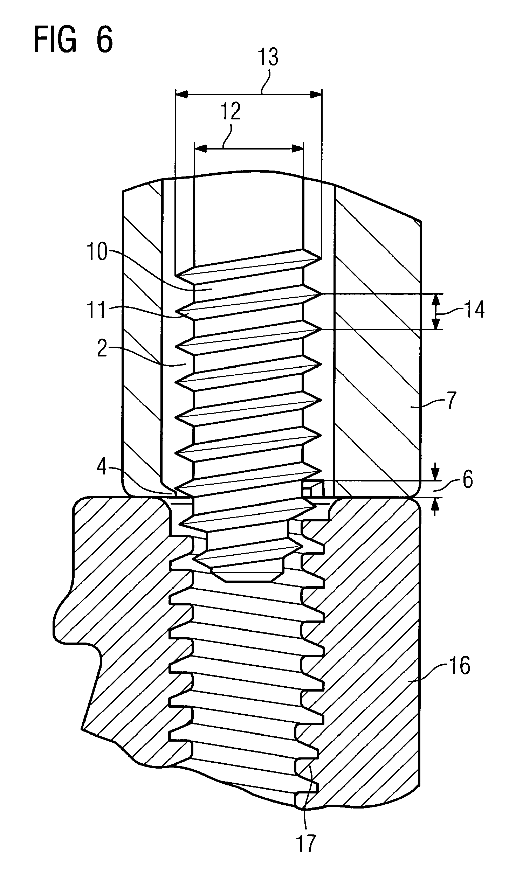

FIG 6 zeigt die Vorrichtung gemäß FIG 5 in detaillierterer Schnittdarstellung. Dargestellt ist ein Teil der Vorrichtung 1, die in ihrem Körper 7 eine Ausnehmung 2 aufweist. Dargestellt ist zudem das weitere Teil 16 mit einem Innengewinde 17. Schließlich ist ein Verbindungsmittel 10 mit einem Außengewinde 11 dargestellt, welches zum Eingriff in das Innengewinde 17 des weiteren Teils 16 vorgesehen ist. Das Außengewinde 11 des Verbindungsmittels 10 weist einen Kerndurchmesser 12 sowie einen Außendurchmesser 13 auf. Die Gewindesteigung 14 entspricht dem Abstand der Gewindegänge des Außengewindes 11. Die Gewindesteigung 14 entspricht zudem dem Weg, den das Verbindungsmittel 10 bei einer Umdrehung im Eingriff im Innengewinde 17 axial zurücklegt. Um das Verhaken des Außengewindes 11 im ausgeschraubten Zustand mit dem Innengewinde 17 des weiteren Teils 16 effektiv zu verhindern, sind in die Ausnehmung 2 hineinragende Elemente 4 vorgesehen, welche den kleinsten inneren Durchmesser der Ausnehmung 2 derart verringern, dass der verringerte innere Durchmesser kleiner als der Außendurchmesser 13 und größer als der Kerndurchmesser 12 des Außengewindes 11 des Verbindungsmittels 10 ist. Die in FIG 6 mit dem Bezugszeichen 6 gekennzeichnete axiale Ausdehnung des Elements 4 ist kleiner als eine Gewindesteigung 14 des Außengewindes 11 des Verbindungsmittels 10. Die radiale und axiale Ausdehnung des mindestens einen Elements 4 werden somit derart gewählt, dass das Element 4 einerseits die definierte Position des Außengewindes 11 sicherstellt, andererseits nicht selbst die Funktion eines Innengewindes übernimmt, da dies die feste Verbindung der mit dem Verbindungsmittel 10 zu verbindenden Teile 1, 16 beeinträchtigen würde.

Die Vorrichtung 1 ist üblicherweise Teil eines zu montierenden Bauteils und wird als Element 4 in Form eines umlaufenden oder durch mehrere Unterbrechungen gekennzeichneten Rings angeformt. Die Fertigung dieses Element 4 kann durch Integration in einer Form für Spritzgussteile oder durch nachträgliches Verstemmen an einem fertigen Teil erfolgen. In diesem Fall ist das mindestens eine Element 4 einstückig mit der Vorrichtung 1 verbunden. Ebenso könnte das Element 4 nachträglich in die Vorrichtung 1 eingesetzt werden. In diesem Fall ist das Element 4 ein oder mehrere separate Bauteile. In der Vorgehensweise ist hierbei grundsätzlich kein Unterschied zwischen einem Metall- oder Kunststoffteil vorhanden.

Es ist nicht zwingend erforderlich, dass das Element 4, so wie in den Figuren dargestellt, in einer sich radial erstreckenden Ebene angeordnet ist. Es kann auch mit der Gewindesteigung ausgebildet werden. Das Element 4 ist für einen Benutzer aufgrund der geringen Abmessungen nicht unbedingt sofort sichtbar.

Zusammengefasst betrifft die Erfindung somit eine Vorrichtung zur Aufnahme eines Verbindungsmittels 10 mit einem Außengewinde 11 sowie ein Verfahren zur Herstellung einer solchen Vorrichtung 1. Das Außengewinde 11 weist einen Kerndurchmesser 12 und einen Außendurchmesser 13 auf. Um eine einfache Vorrichtung zum Verhindern des Verhakens von Gewindegängen beim Lösen einer Schraubverbindung bereitzustellen, wird vorgeschlagen, dass die Vorrichtung 1 eine Ausnehmung 2 zur Aufnahme des Verbindungsmittels 10 aufweist, wobei die Ausnehmung 2 einen kleinsten inneren Durchmesser 3 aufweist, welcher größer ist als der Außendurchmesser 13, wobei die Vorrichtung 1 mindestens ein radial angeordnetes, in die Ausnehmung 2 hineinragendes Element 4 zur Verringerung des kleinsten inneren Durchmessers 3 auf einen verringerten inneren Durchmesser 5 aufweist, wobei der verringerte innere Durchmesser 5 kleiner als der Außendurchmesser 13 und größer als der Kerndurchmesser 12 ist, wobei die axiale Ausdehnung 6 des mindestens einen Elements 4 kleiner als eine Gewindesteigung 14 des Außengewindes 11 des aufnehmbaren Verbindungsmittels 10 ist.

## Patentansprüche

1. Vorrichtung zur Aufnahme eines Verbindungsmittels (10) mit einem Außengewinde (11), wobei das Außengewinde (11) einen Kerndurchmesser (12) und einen Außendurchmesser (13) aufweist, wobei die Vorrichtung (1) eine Ausnehmung (2) zur Aufnahme des Verbindungsmittels (10) aufweist, wobei die Ausnehmung (2) einen kleinsten inneren Durchmesser (3) aufweist, welcher größer ist als der Außendurchmesser (13), wobei die Vorrichtung (1) mindestens ein radial angeordnetes, in die Ausnehmung (2) hineinragendes Element (4) zur Verringerung des kleinsten inneren Durchmessers (3) auf einen verringerten inneren Durchmesser (5) aufweist, wobei der verringerte innere Durchmesser (5) kleiner als der Außendurchmesser (13) und größer als der Kerndurchmesser (12) ist, wobei die axiale Ausdehnung (6) des mindestens einen Elements (4) kleiner als eine Gewindesteigung (14) des Außengewindes (11) des aufnehmbaren Verbindungsmittels (10) ist.

2. Vorrichtung nach Anspruch 1,
**dadurch gekennzeichnet ,**
**dass** der verringerte innere Durchmesser (5) ungefähr dem Flankendurchmesser entspricht.

3. Vorrichtung nach Anspruch 1 oder 2,
**dadurch gekennzeichnet ,**
**dass** das mindestens eine Element (4) radial in einer Ebene angeordnet ist.

4. Vorrichtung nach einem der vorhergehenden Ansprüche,
**dadurch gekennzeichnet ,**
**dass** das Element (4) als Ring ausgebildet ist.

5. Vorrichtung nach einem der vorhergehenden Ansprüche,
**dadurch gekennzeichnet ,**
**dass** das Element (4) als unterbrochener Ring ausgebildet ist.

6. Vorrichtung nach einem der vorhergehenden Ansprüche,
**dadurch gekennzeichnet ,**
**dass** das mindestens eine Element (4) derart ausgebildet ist, dass das in die Ausnehmung (2) aufnehmbare Verbindungsmittel (10) ohne Zerstörung des Außengewindes (11) im Bereich des Elements (4) durch die Ausnehmung (2) bewegbar ist.

7. Vorrichtung nach einem der vorhergehenden Ansprüche,
**dadurch gekennzeichnet ,**
**dass** die Vorrichtung (1) aus Metall ist.

8. Vorrichtung nach einem der vorhergehenden Ansprüche,
**dadurch gekennzeichnet ,**
**dass** die Vorrichtung (1) aus Kunststoff ist.

9. Vorrichtung nach einem der vorhergehenden Ansprüche,
**dadurch gekennzeichnet ,**
**dass** das mindestens eine Element (4) einstückig mit der Vorrichtung (1) verbunden ist.

10. Verfahren zur Herstellung einer Vorrichtung (1) nach einem der vorhergehenden Ansprüche.

11. Verfahren nach Anspruch 10, bei welchem das mindestens eine Element (4) durch Integration in einer Form für Spritzgussteile ausgeformt wird.

12. Verfahren nach Anspruch 10, bei welchem das mindestens eine Element (4) durch nachträgliches Verstemmen an einem fertigen Teil ausgeformt wird.

13. Verfahren nach Anspruch 10, bei welchem das mindestens eine Element (4) nachträglich in die Ausnehmung (2) eingesetzt wird.
